# EUROPEAN PATENT SPECIFICATION

(11) **EP 2 797 688 B1**
(45) Date of publication and mention of the grant of the patent: **16.01.2019**
(21) Application number: 12818628.5
(22) Date of filing: 21.12.2012
(51) Int. Cl.: B01J 23/28, C10G 45/04

(54) **CATALYTIC SYSTEM, PROCESS FOR THE PREPARATION OF SAID SYSTEM AND HYDROTREATMENT PROCESS USING SAID SYSTEM**
KATALYSATORSYSTEM, VERFAHREN ZUR HERSTELLUNG DIESES SYSTEMS UND WASSERSTOFFBEHANDLUNGSVERFAHREN UNTER VERWENDUNG DES SYSTEMS
SYSTÈME CATALYTIQUE, PROCÉDÉ POUR FABRIQUER LEDIT SYSTÈME ET PROCÉDÉ D'HYDROTRAITEMENT UTILISANT LEDIT SYSTÈME

(30) Priority: 28.12.2011 IT MI20112409
(43) Date of publication of application: 05.11.2014
(73) Proprietor: ENI S.p.A., 00144 Rome (IT)
(72) Inventor: BELLUSSI, Giuseppe, I-29122 Piacenza (IT); MILLINI, Roberto, I-20070 Cerro al Lambro (Milano) (IT); MOLINARI, Daniele, I-26900 Lodi (LO) (IT); MOSCOTTI, Daniele Giulio, I-20861 Brugherio (Monza e Brianza) (IT)
(74) Representative: Murgitroyd & Company
(86) International application number: PCT/IB2012/057603
(87) International publication number: WO 2013/098741

(56) References cited:
- WO-A1-2009/149923
- GB-A- 1 515 388

## Description

The present patent application relates to a catalytic system, a process for the preparation of said system and the hydrotreatment process using said system.

The catalytic system described is applied in industrial catalytic processes carried out in fixed-bed reactors which operate hydrogenations or hydroconversions of organic compounds, in particular hydrocarbon compounds, in the presence of pressurized gaseous hydrogen, or in the presence of gaseous mixtures containing hydrogen as volumetrically majority component. In particular, it is applied in the oil refining, chemical and petrochemical industries, more specifically in refining processes for hydrocracking of vacuum distillates or distillation residues and in refinery processes for the hydrotreatment of distillates.

Reference industrial applications for the invention described are represented by operations carried out with fixed-bed reactors and catalysts containing metals of group VI and VIII A deposited on carriers mainly consisting of materials with a high surface area, such as alumina, silico-alumina, zeolites or mixtures of these. In particular, the main references for the application claimed are catalysts with Co and Mo or with Ni and Mo, deposited on γ-alumina or γ-alumina in the presence of zeolite Y.

Application examples can be found in the oil refining industry, in particular, in hydrotreating processes of light, medium and heavy distillates and residues, and in hydrocracking processes of vacuum distillates or distillation residues.

Traditional hydrotreating and hydrocracking processes use catalysts consisting of sulfides of transition metals of group VI and/or VIII A (mainly Ni-Mo, Co-Mo) . The sulfides are prevalently generated starting from the oxides of the corresponding metals. This operation is generally effected in situ, i.e. in the reactor after loading.
WO 2009/149923 describes a catalytic system, which comprises:
- a catalyst, having a hydrogenating function; containing MoS₂ or WS₂ or mixtures thereof in lamellar form or an oil-soluble precursor of the same;
- a co-catalyst, containing an active phase which promotes in particular the cracking and/or denitrogenation of the feedstock, having particles with nanometric or micronic dimensions, selected from cracking and/or denitrogenation catalysts, preferably consisting of zeolites having small-sized crystals and with a low aggregation degree between the primary particles, and/or oxides or sulphides or precursors of Ni and/or Co sulphides, in a mixture with Mo and/or W, possibly supported.
GB 1515388 describes a process for preparing a hydrodesulphurization catalyst, which comprises:
- incorporating sufficient of a molybdenum compound with a porous inorganic oxide support to provide a composite containing from 8 to 20 weight percent, based on the weight of said support, of molybdenum trioxide, said molybdenum compound being molybdenum trioxide or a compound of molybdenum which is converted to molybdenum trioxide in the subsequent heat treatment;
- heat treating the resulting composite;
- sulfiding the heat treated composite to convert the MoO₃ to a sulfide of stoichiometry dose to MoS₂; and subsequently incorporating sufficient of a cobalt or nickel compound with said sulfided composite to provide from 1 to 8 weight percent of CoO or NiO, based on the weight of said support.

Commercial catalysts can be used for several months under normal operating conditions. With time, the catalysts progressively lose their activity due to deactivation phenomena mainly due to the operating temperature and nature of the hydrocarbon feedstock to be processed.

The deactivation rate greatly depends on the type of hydrocarbons object of the process carried out in the reactor and objectives to be reached with the same.

A new catalytic system has now been found, which, with the same operating conditions, feedstock fed and objectives to be reached with the process (conversion degree of the feedstock, quality of the products, productivity, etc...), has an increase in the useful life as it is protected from some of the phenomena that cause deactivation thanks to a thin layer of molybdenum sulfide on the surface.

This new system can also be obtained by depositing particles of molybdenite on the surface of conventional catalysts for hydroprocessing, that allow the performances of fixed-bed catalytic processes to be enhanced without requiring plant modifications and/or additional equipment with a high capital investment.

The catalytic system, object of the present invention, comprises a nucleus containing a supported hydrotreatment, hydrogenation and/or cracking catalyst or a carrier selected from an amorphous silico-aluminate, a crystalline silico-aluminate (zeolite) and/or an alumina characterized in that the surface of said nucleus is partially or totally covered by a layer of molybdenite.

The supported hydrotreatment, hydrogenation or cracking catalysts can be selected from all those known in the art, preferably from those containing metals of group VI and VIII A, more preferably those containing Mo and Ni or Mo and Co.

The carrier preferably consists of materials having a high surface area, such as amorphous silico-aluminates, crystalline silico-aluminates (zeolites), for example zeolite Y, and/or alumina, more preferably alumina or γ-alumina.

Catalysts containing Mo and Ni or Mo and Co supported on alumina or γ-alumina are among those most recommended for hydrotreatment processes.

The surface of the catalyst is covered by a layer of molybdenite in a percentage preferably ranging from 10% to 100%, more preferably from 30% to 60%, with respect to the whole surface.

The molybdenum contained in the molybdenite that covers the catalyst has a weight content not higher than 1% of the catalytic system, whereas the layer of molybdenite must have a thickness ranging from 0.001 µ to 1 µ, more preferably from 0.01 µ to 0.1 µ.

The process for the preparation of the catalytic system described above, a further object of the present invention, starting from a nucleus containing the supported hydrotreatment, hydrogenation and/or cracking catalyst or the carrier, comprises a deposition on the surface of said nucleus of a preformed molybdenite or an oil-soluble precursor of molybdenum so as to partially or totally cover the surface of said nucleus with the layer of preformed molybdenite or molybdenite formed.

In the case of a nucleus containing supported catalysts, the process claimed, by depositing a thin layer of molybdenum sulfide on the surface of the catalysts commonly used in fixed-bed reactors, exerting a protective function, therefore offers advantages in terms of catalytic performances and consequently duration of the catalyst.

The preparation of the catalytic system is preferably carried out in situ where the deposition of the preformed molybdenite or oil-soluble precursor of molybdenum takes place by means of a pretreatment of the supported hydrotreatment, hydrogenation or cracking catalyst or carrier in a fixed-bed reactor into which a hydrocarbon feedstock containing said preformed molybdenite or said oil-soluble precursor of molybdenum, is fed.

The controlled deposition of molybdenum sulfide can be carryed out by feeding a hydrocarbon feedstock to the reactor, preferably a medium or heavy distillate, containing a soluble molybdenum compound, preferably at a maximum concentration equivalent to 10,000 wppm of Mo, under such conditions as to favour the formation of MoS₂ and its adhesion to the particles of heterogeneous catalyst already present in the reactor, forming a thin surface layer, preferably having a thickness ranging from 0.001 µ to 1 µ, more preferably from 0.01 µ to 0.1 µ.

The soluble molybdenum compound can preferably be selected from Mo-2-ethyl-hexanoate, Mo-naphthenate and Mo-hexanoate.

Said pretreatment can be preceded by a possible sulfidation treatment with the addition of a suitable sulfiding agent, such as di-methyl-disulfide (DMDS) .

The feeding of the hydrocarbon feedstock containing the precursor of molybdenum sulfide can be operated at a temperature higher than 150°C.

The addition can proceed for a time sufficient for coating the surface of the nucleus containing the supported catalyst or carrier present in the fixed-bed reactor up to a maximum of Mo deposited equal to 1% by weight of the total catalyst.

The characterizing aspect of the innovation specifically consists in the close interaction between the two catalytic phases, which are both immobilized inside the reactor, maximizing the synergy between the two catalytic systems.

In conventional fixed-bed reactors, upgrading reactions mainly or exclusively take place within the pores of the supported catalyst. The reacting molecules can undergo thermal cracking in the bulk, subsequently being diffused in the porous catalyst where the hydrogenation reactions take place, or the cracking and hydrogenation reactions can both take place in correspondence with the outer or inner surface of the catalyst. The overall result of the reactions is the formation of stable products having a higher quality and possibly lower molecular weight with respect to the feedstock fed.

The molecules having larger dimensions contained in the feedstock have more difficulty in being diffused inside the pores or they are not diffused at all. These can interact with the outer surface of the catalyst and/or undergo the effects of thermal cracking. These molecules can form radicalic species that interact with other species producing compounds that represent the precursors of coke and can be deposited on the surface of the catalyst inside the catalytic bed or in the equipment downstream.

The deposition of these carbonaceous species on the catalyst leads to the deactivation of the same and consequently to the progressive loss of its activity.

The process described allows an increase in the resistance of the catalyst towards deactivation phenomena caused by the deposition of carbonaceous species or metals (in the case of fixed-bed processes that treat sufficiently heavy feedstocks).

The catalytic system obtained with the process claimed remains confined as in normal fixed-bed applications, maintaining all the advantages associated with this type of technology, but it benefits from the presence of the outer layer of molybdenite deposited during the pretreatment. The MoS₂ deposited not only guarantees an additional catalytic activity, but is also capable of exerting a protective action, promoting the hydrogenation reactions outside the catalyst granules, above all of species having a higher molecular weight, thus keeping the formation of carbonaceous deposits under control.

The conversion to sulfides of the metals possibly present in the feedstock is also promoted, thus limiting deactivation phenomena linked to their deposition.

The process claimed allows the controlled formation of a layer of molybdenum sulfide on the granules or extruded products of a conventional catalyst for fixed-bed hydrotreating or hydrocracking. In this way, a catalytic material is obtained which is more resistant to deactivation and which consequently allows it to have a longer useful life together with an increase in its performances.

By feeding the oil-soluble molybdenum precursor dissolved in the hydrocarbon feedstock, a sufficiently high concentration of sulfur is required for allowing the sulfidation of the molybdenum. This condition is generally satisfied by feedstocks normally fed to fixed-bed hydroprocessing reactors. If there is a lack of sulfur, a suitable sulfiding agent can be added to the feed, such as, for example, di-methyl-disulfide (DMDS). During the sulfidation phase, it is important to ensure the presence of a reducing atmosphere, obtained by co-feeding hydrogen to the reactor.

The treatment must be effected at a temperature which is sufficiently high to guarantee the quantitative transformation of the precursor.

The whole pretreatment process, when starting from an oil-soluble precursor of molybdenum, can be carried out in two separate phases:
- during the first phase, the temperatures are sufficiently low as to prevent the formation of molybdenite, thus allowing the precursor to be adsorbed on the surface of the supported catalyst or carrier without decomposing;
- in the second phase, the temperature is increased to allow the formation of molybdenum sulfide.

Once the desired coating level has been obtained, the feeding of molybdenum is suspended and the system is brought to the reaction conditions typical for the hydroprocessing process.

The catalytic material thus formed allows the efficiency of fixed-bed hydrotreatment processes to be increased in terms of an increase in the life of the hydrotreatment catalyst and also an improvement in the catalytic performances. The layer of MoS₂ deposited on the outer surface of the catalyst granules is in fact capable of exerting a preliminary upgrading action outside the catalyst granules. In particular, the layer of molybdenum sulfide is effective with respect to the species having a higher molecular weight and allows their conversion and upgrading, limiting problems deriving from their impossibility or difficulty in being diffused inside the porous system of the supported catalyst.

The outer layer of molybdenum, moreover, is capable of promoting demetallation reactions, favouring the conversion to sulfides of the metals contained in the species having a higher molecular dimension (in the case of sufficiently heavy hydrocarbon feedstocks).

In this way, the outer layer of molybdenite exerts a protective action on the system, reducing the incidence of fouling phenomena of the catalyst.

The catalytic system and preparation process proposed can be applied to all fixed-bed processes. Applications capable of drawing the greatest advantages are those concerning the upgrading or conversion of heavy and very heavy feedstocks, such as vacuum distillates and distillation residues. In particular, the presence of asphaltenes makes heavy feedstocks difficult to be treated in fixed-bed systems due to the limited possibility of an effective interaction between these species and the catalyst. The asphaltene fraction is the main responsible for deactivation phenomena caused by the deposition of organic compounds (fouling).

Thanks to the presence of the layer of molybdenite outside the catalytic granule, the material acquires a greater efficiency in the treatment of asphaltene species, with a significant reduction in the formation of precursors of coke and sediments, thus also reducing fouling of the equipment, improving the conversion levels, and allowing the fixed-bed hydroprocessing unit to treat a wider range of feedstocks, also of a lower quality, increasing the lifetimes of the catalyst and reducing the necessity of stopping the plant, with a positive impact on the efficiency of the process.

The hydrotreatment process of hydrocarbons selected from medium and heavy distillates and distillation residues, further object of the invention, comprises sending said hydrocarbons to a hydrotreatment step performed in one or more fixed-bed reactors, using the claimed catalytic system, in the presence of hydrogen or a mixture of hydrogen and H₂S, obtaining a stream of products in vapour or vapour-liquid phase, followed by a separation step, in order to obtain a liquid stream, wherein the hydrotreatment step is carried out at a temperature ranging from 340 to 440°C and at a pressure ranging from 15 to 200 atmospheres.

The hydrotreatment step can be preceded by a pretreatment of the catalyst in the same hydrotreatment reactor using a preformed molybdenite or an oil-soluble precursor of molybdenum added to the hydrocarbon feedstock, possibly also adding a sulfiding agent, as already described for the preparation process described above and claimed.

A series of examples are provided hereunder, which should not be considered as limiting the scope of the invention, which illustrate the deposition process of the protective layer of molybdenum sulfide on a fixed-bed catalyst (Example 1) and the results of two comparative tests that illustrate the benefits obtained with the deposition of the layer of molybdenum sulfide prepared with the claimed process (Examples 2 and 3).

All the tests described in the following examples were carried out using a tubular laboratory reactor having a diameter of 25.4 mm and a height of 600 mm where 50 cc of a catalyst were charged.

### Example 1

The tubular reactor was fed down-flow in equicurrent with 30 N litres/h of hydrogen and 30 g/h of hydrocarbon feedstock containing 3,000 ppm of Molybdenum in oil-soluble form (Mo-octoate), operating at a pressure of 30 bar. The feedstock was obtained by adding the oil-soluble precursor to a vacuum distillate having the composition indicated in Table 1. 50 cc of a commercial catalyst in the form of cylindrical pellets having a diameter of 1.5 mm, containing zeolite Y in acid form, were charged into the reactor. Metal elements are not present on the catalyst used.

**Table 1: properties of the feedstock used**

| Density | Kg/m3 | 1040 |
|---|---|---|
| S | wt% | 2.48 |
| C | wt% | 87.7 |
| H | wt% | 8.84 |
| N | wt ppm | 4800 |
| RCC | wt% | 0.86 |
| IBP | °C | 279 |
| IBP-350 | wt% | 11.7 |
| 350-500 | wt% | 78.4 |
| 500-FBP | wt% | 9.9 |
| FBP | °C | 552 |

The Y zeolite contained in the catalyst is characterized by a molar ratio SiO₂/Al₂O₃ = 6.18. The characteristics of the Y zeolite used are indicated in Table 2. Table 3 indicates the characteristics of the catalyst in the form of cylindrical pellets.

**Table 2: properties of the zeolite used for the preparation of the catalyst used**

| | | |
|---|---|---|
| SiO₂ | wt% | 78.3 |
| Al₂O₃ | wt% | 21.5 |
| Na₂O | wt% | 0.28 |
| SiO₂ /Al₂O₃ | mol/mol | 6.18 |
| NH₃-TPD | mmol/g | 1.3 |
| Surface Area BET | m²/g | 550 |
| Crystal Size | µm | 0.2-0.4 |
| Mean Particle Size | µm | 6-8 |

**Table 3: properties of the catalyst used**

| | | |
|---|---|---|
| Binder (Clay) | wt% | 25 |
| Pore Volume | ml/g | 0.57 |
| Bulk density | g/ml | 0.47 |
| Diameter of pellets | mm | 1.5 |

The test was divided into two phases, initially keeping the system at 200°C for 70 h and subsequently increasing the temperature to 380°C for a further 70 h.

The present example defines the deposition procedure of molybdenum on the catalyst.

### Example 2 (comparative)

A test was carried out using a hydrotreating catalyst, consisting of a NiMO/Al₂O₃ system, whose main characteristics are indicated in Table 4.

**Table 4: properties of the hydrotreating catalyst**

| | | |
|---|---|---|
| Mo | wt% | 10.1 |
| Ni | wt% | 3.9 |
| P | wt% | 2.4 |
| Surface Area | m2/g | 294 |
| Pore Volume | ml/g | 0.72 |
| Diameter of pellets | mm | 1.5 |

The catalyst was charged into the reactor used for Example 1 and sulfided according to the consolidated procedures. The feedstock described in Table 5 was then fed.

**Table 5: properties of the feedstock used**

| Density | kg/m3 | 960.5 |
|---|---|---|
| S | wt% | 1.8 |
| C | wt% | 86.4 |
| H | wt% | 10.8 |
| N | wt ppm | 4450 |
| RCC | wt% | 0.1 |
| IBP | °C | 255.5 |
| IBP-350 | wt% | 14.8 |
| 350-500 | wt% | 81.4 |
| 500-FBP | wt% | 3.8 |
| FBP | °C | 526.5 |

The operating conditions applied are summarized hereunder:
WABT SOR = 380°C
P H2 = 130 bar
LHSV = 1.2 h-1
H₂/feedstock = 900 (Nl/l)

The objective of the tests was to reach a concentration of nitrogen in the products of less than 700 wppm.

The main characteristics of the average liquid product obtained are listed in Table 6 below.

**Table 6**

| | | |
|---|---|---|
| Density | g/cm3 | 0.9201 |
| S | wppm | 1900 |
| N | wppm | 687 |
| Monoaromatics | wt% | 39.4 |
| Diaromatics | wt% | 13.9 |
| Tri+ Aromatics | wt% | 3.7 |

The concentration of nitrogen with time was monitored under these conditions and the average temperature was consequently adjusted for reaching the target concentration value of nitrogen. Due to the deactivation of the catalyst, it was necessary to increase the temperature by an average of 2.25°C/month to maintain the level of nitrogen below the target value.

### Example 3

A further test was carried out, adopting the same catalyst used for Example 2 and the controlled deposition process of the layer of molybdenum sulfide was then applied, following the procedure described in Example 1.

At the end of the pretreatment phase, the feedstock was fed as such (Table 5). The same operating conditions used for the test described in Example 2 were established, and are summarized hereunder:
WABT SOR = 380°C
P H2 = 130 bar
LHSV = 1.2 h-1
H₂/feedstock = 900 (Nl/l)

Also in this case, the operating conditions, in the initial phase of the test and subsequently, were established for obtaining a concentration of nitrogen in the liquid product of less than 700 wppm.

The main characteristics of the average liquid product obtained are listed in the following Table 7.

**Table 7**

| | | |
|---|---|---|
| S | wppm | 1485 |
| N | wppm | 678 |
| Monoaromatics | wt% | 40.6 |
| Diaromatics | wt% | 10.7 |
| Tri+ Aromatics | wt% | 1.8 |
| Density | g/cm3 | 0.9185 |

In order to keep the concentration of nitrogen below 700 wppm, due to deactivation of the catalyst, it was necessary to increase the WABT by an average of 1.5°C/month. This value is about 30% lower than that observed with the same catalyst in the absence of the layer of MoS₂ deposited.

## Claims

1. A catalytic system comprising a nucleus containing a supported hydrotreatment, hydrogenation and/or cracking catalyst or a carrier selected from an amorphous silico-aluminate, a crystalline silico-aluminate (zeolite) and/or an alumina **characterized in that** the surface of said nucleus is partially or totally covered by a layer of molybdenite wherein the molybdenum contained in the molybdenite that covers the catalyst has a weight content not higher than 1% of the catalytic system, and the layer of molybdenite has a thickness ranging from 0.001 µm to 1 µm.

2. The catalytic system according to claim 1, wherein the layer of molybdenite has a thickness ranging from 0.01 µ to 0.1 µ.

3. The catalytic system according to claim 1, wherein the surface of the catalyst is covered by a layer of molybdenite in a percentage ranging from 10% to 100% with respect to the whole surface.

4. The catalytic system according to claim 3, wherein the surface of the catalyst is covered by a layer of molybdenite in a percentage ranging from 30% to 60% with respect to the whole surface.

5. The catalytic system according to claim 1, wherein the supported catalyst contains metals of group VI and VIII A.

6. The catalytic system according to claim 1, wherein the support is alumina or γ-alumina.

7. The catalytic system according to claim 1, wherein the catalyst contains Mo and Ni or Mo and Co supported on alumina or γ-alumina.

8. A process for the preparation of a catalytic system according to at least one of the claims from 1 to 7, starting from a nucleus containing the supported hydroconversion, hydrogenation or cracking catalyst or carrier, which comprises a deposition on the surface of said nucleus of a preformed molybdenite or an oil-soluble precursor of molybdenum so as to partially or totally cover the surface of said nucleus with the layer of preformed molybdenite or molybdenite formed.

9. The process for the preparation of a catalytic system according to claim 8, wherein the deposition of the preformed molybdenite or oil-soluble precursor of molybdenum takes place by means of a pretreatment of the supported catalyst or carrier in a fixed-bed reactor in which a hydrocarbon feedstock containing said preformed molybdenite or oil-soluble precursor of molybdenum, is fed.

10. The process according to claim 9, wherein the pretreatment is effected with the addition of a suitable sulfidizing agent.

11. The process according to claim 10, wherein the sulfidizing agent added is di-methyl-di-sulfide (DMDS).

12. The process according to claim 9, wherein the pretreatment is kept for a time sufficient for covering the surface of the nucleus containing the supported catalyst or carrier present in the fixed-bed reactor with a quantity of Mo not higher than 1% by weight of the final catalyst.

13. The process according to claim 9, wherein the concentration of Mo in the hydrocarbon feedstock fed to the reactor is lower than 10,000 ppm by weight.

14. The process according to claim 8, wherein the soluble precursors of Mo are selected from Mo-2-ethyl-hexanoate (Mo-octoate) and Mo-naphthenate.

15. The process according to claim 9, wherein the pretreatment is performed by means of the oil-soluble precursor of molybdenum and carried out in two separate phases:
• during the first phase, the temperatures are sufficiently low to prevent the formation of molybdenite, thus allowing the precursor to be adsorbed on the surface of the supported catalyst or carrier without decomposing;
• in the second phase, the temperature is increased to allow the formation of molybdenum sulfide.

16. A process for the hydrotreatment of hydrocarbons selected from medium and heavy distillates and distillation residues, which comprises sending the hydrocarbons to a hydrotreatment step effected in one or more fixed-bed reactors, using a catalytic system according to at least one of the claims from 1 to 7, in the presence of hydrogen or a mixture of hydrogen and H₂S, obtaining a stream of products in vapour or vapour-liquid phase followed by a separation in order to obtain a liquid stream, wherein the hydrotreatment step is carried out at a temperature ranging from 340 to 440°C and a pressure ranging from 15 to 200 atmospheres.

17. The process according to claim 16, wherein the hydrotreatment step is preceded by a pretreatment of the catalyst in the same hydrotreatment reactor(s) by means of a preformed molybdenite or an oil-soluble precursor of molybdenum added to the hydrocarbon feedstock fed, possibly also adding a sulfidizing agent.

## Patentansprüche

1. Ein katalytisches System, beinhaltend einen Kern, der einen Hydrotreating-, Hydrierungs- und/oder Crackträgerkatalysator oder einen Trägerstoff, ausgewählt aus einem amorphen Silicoaluminat, einem kristallinen Silicoaluminat (Zeolith) und/oder einem Aluminiumoxid, enthält, **dadurch gekennzeichnet, dass** die Oberfläche des Kerns teilweise oder vollständig von einer Schicht Molybdänit bedeckt ist, wobei das Molybdän, das in dem Molybdänit enthalten ist, welches den Katalysator bedeckt, einen Gewichtsgehalt von nicht mehr als 1 % des katalytischen Systems aufweist und die Schicht Molybdänit eine Dicke im Bereich von 0,001 µm bis 1 µm aufweist.

2. Katalytisches System gemäß Anspruch 1, wobei die Schicht Molybdänit eine Dicke im Bereich von 0,01 µ bis 0,1 µ aufweist.

3. Katalytisches System gemäß Anspruch 1, wobei die Oberfläche des Katalysators, mit Bezug auf die gesamte Oberfläche, zu einem prozentualen Anteil im Bereich von 10 % bis 100 % von einer Schicht Molybdänit bedeckt ist.

4. Katalytisches System gemäß Anspruch 3, wobei die Oberfläche des Katalysators, mit Bezug auf die gesamte Oberfläche, zu einem prozentualen Anteil im Bereich von 30 % bis 60 % von einer Schicht Molybdänit bedeckt ist.

5. Katalytisches System gemäß Anspruch 1, wobei der Trägerkatalysator Metalle der Gruppe VI und VIII A enthält.

6. Katalytisches System gemäß Anspruch 1, wobei der Träger Aluminiumoxid oder γ-Aluminiumoxid ist.

7. Katalytisches System gemäß Anspruch 1, wobei der Katalysator auf Aluminiumoxid oder γ-Aluminiumoxid geträgertes Mo und Ni oder Mo und Co enthält.

8. Ein Verfahren zur Herstellung eines katalytischen Systems gemäß mindestens einem der Ansprüche 1 bis 7, ausgehend von einem Kern, der den Hydrokonversions-, Hydrierungs- oder Crackträgerkatalysator oder Trägerstoff enthält, beinhaltend eine Ablagerung auf der Oberfläche des Kerns aus einem vorgebildeten Molybdänit oder einem öllöslichen Molybdänpräkursor, um die Oberfläche des Kerns teilweise oder vollständig mit der gebildeten Schicht vorgebildeten Molybdänits oder gebildeten Molybdänits zu bedecken.

9. Verfahren zur Herstellung eines katalytischen Systems gemäß Anspruch 8, wobei die Ablagerung des vorgebildeten Molybdänits oder öllöslichen Molybdänpräkursors mittels einer Vorbehandlung des Trägerkatalysators oder Trägerstoffs in einem Festbettreaktor stattfindet, in den ein Kohlenwasserstoffausgangsmaterial, welches den vorgebildeten Molybdänit oder öllöslichen Molybdänpräkursor enthält, zugeführt wird.

10. Verfahren gemäß Anspruch 9, wobei die Vorbehandlung durch die Zugabe eines geeigneten Sulfidierungsmittels erfolgt.

11. Verfahren gemäß Anspruch 10, wobei das zugegebene Sulfidierungsmittel Dimethyldisulfid (DMDS) ist.

12. Verfahren gemäß Anspruch 9, wobei die Vorbehandlung über eine Zeit aufrechterhalten wird, die ausreicht, um die Oberfläche des Kerns, der den Trägerkatalysator oder Trägerstoff enthält, der in dem Festbettreaktor vorhanden ist, mit einer Menge an Mo zu bedecken, die nicht mehr als 1 Gew.-% des Endkatalysators beträgt.

13. Verfahren gemäß Anspruch 9, wobei die Mo-Konzentration in dem Kohlenwasserstoffausgangsmaterial, welches dem Reaktor zugeführt wird, weniger als 10 000 Gew.-ppm beträgt.

14. Verfahren gemäß Anspruch 8, wobei die löslichen Mo-Präkursoren aus Mo-2-Ethylhexanoat (Mo-Octoat) und Mo-Naphthenat ausgewählt sind.

15. Verfahren gemäß Anspruch 9, wobei die Vorbehandlung mittels des öllöslichen Molybdänpräkursors durchgeführt und in zwei getrennten Phasen ausgeführt wird:
• während der ersten Phase sind die Temperaturen ausreichend gering, um die Bildung von Molybdänit zu verhindern, was ermöglicht, dass der Präkursor auf der Oberfläche des Trägerkatalysators oder Trägerstoffs ohne Zersetzung adsorbiert wird;
• in der zweiten Phase wird die Temperatur erhöht, um die Bildung von Molybdänsulfid zu ermöglichen.

16. Ein Verfahren zum Hydrotreating von Kohlenwasserstoffen, die aus mittleren und schweren Destillaten und Destillationsrückständen ausgewählt sind, beinhaltend das Senden der Kohlenwasserstoffe zu einem Hydrotreating-Schritt, der in einem oder mehreren Festbettreaktoren erfolgt, das Verwenden eines katalytischen Systems gemäß mindestens einem der Ansprüche 1 bis 7 in Gegenwart von Wasserstoff oder einer Mischung aus Wasserstoff und H₂S, das Erhalten eines Produktstroms in Dampf- oder Dampf-Flüssigkeitsphase, gefolgt von einer Trennung, um einen Flüssigkeitsstrom zu erhalten, wobei der Hydrotreating-Schritt bei einer Temperatur im Bereich von 340 bis 440 °C und einem Druck im Bereich von 15 bis 200 physikalischen Atmosphären ausgeführt wird.

17. Verfahren gemäß Anspruch 16, wobei dem Hydrotreating-Schritt eine Vorbehandlung des Katalysators in demselben (denselben) Hydrotreating-Reaktor(en) mittels eines vorgebildeten Molybdänits oder eines öllöslichen Molybdänpräkursors, der dem Kohlenwasserstoffausgangsmaterial zugeführt wird, vorausgeht, möglicherweise auch das Zugeben eines Sulfidierungsmittels.

## Revendications

1. Un système catalytique comprenant un noyau contenant un catalyseur supporté d'hydrotraitement, d'hydrogénation et/ou de craquage ou une matrice sélectionnée parmi un silico-aluminate amorphe, un silico-aluminate cristallin (zéolite) et/ou une alumine **caractérisé en ce que** la surface dudit noyau est partiellement ou totalement recouverte par une couche de molybdénite dans lequel le molybdène contenu dans la molybdénite qui recouvre le catalyseur a une teneur en poids pas supérieure à 1 % du système catalytique, et la couche de molybdénite a une épaisseur comprise dans la gamme allant de 0,001 µm à 1 µm.

2. Le système catalytique selon la revendication 1, dans lequel la couche de molybdénite a une épaisseur comprise dans la gamme allant de 0,01 µ à 0,1 µ.

3. Le système catalytique selon la revendication 1, dans lequel la surface du catalyseur est recouverte par une couche de molybdénite dans un pourcentage compris dans la gamme allant de 10 % à 100 % par rapport à l'ensemble de la surface.

4. Le système catalytique selon la revendication 3, dans lequel la surface du catalyseur est recouverte par une couche de molybdénite dans un pourcentage compris dans la gamme allant de 30 % à 60 % par rapport à l'ensemble de la surface.

5. Le système catalytique selon la revendication 1, dans lequel le catalyseur supporté contient des métaux du groupe VI et du groupe VIII A.

6. Le système catalytique selon la revendication 1, dans lequel le support est de l'alumine ou de la γ-alumine.

7. Le système catalytique selon la revendication 1, dans lequel le catalyseur contient du Mo et du Ni ou du Mo et du Co supportés sur de l'alumine ou de la γ-alumine.

8. Un procédé pour la préparation d'un système catalytique selon au moins l'une des revendications 1 à 7, à partir d'un noyau contenant le catalyseur supporté d'hydroconversion, d'hydrogénation ou de craquage ou la matrice, qui comprend un dépôt sur la surface dudit noyau d'une molybdénite préformée ou d'un précurseur de molybdène soluble dans l'huile de sorte à recouvrir partiellement ou totalement la surface dudit noyau avec la couche de molybdénite préformée ou de molybdénite formée.

9. Le procédé pour la préparation d'un système catalytique selon la revendication 8, dans lequel le dépôt de la molybdénite préformée ou du précurseur de molybdène soluble dans l'huile se produit au moyen d'un prétraitement du catalyseur supporté ou de la matrice dans un réacteur à lit fixe dans lequel une charge d'alimentation hydrocarbonée contenant ladite molybdénite préformée ou ledit précurseur de molybdène soluble dans l'huile est introduite.

10. Le procédé selon la revendication 9, dans lequel le prétraitement est effectué avec l'ajout d'un agent de sulfuration convenable.

11. Le procédé selon la revendication 10, dans lequel l'agent de sulfuration ajouté est le disulfure de diméthyle (DMDS).

12. Le procédé selon la revendication 9, dans lequel le prétraitement est maintenu pendant une période suffisante pour recouvrir la surface du noyau contenant le catalyseur supporté ou la matrice présent(e) dans le réacteur à lit fixe avec une quantité de Mo pas supérieure à 1 % en poids du catalyseur final.

13. Le procédé selon la revendication 9, dans lequel la concentration de Mo dans la charge d'alimentation hydrocarbonée introduite dans le réacteur est inférieure à 10 000 ppm en poids.

14. Le procédé selon la revendication 8, dans lequel les précurseurs de Mo solubles sont sélectionnés parmi le 2-éthyl-hexanoate de Mo (octoate de Mo) et le naphténate de Mo.

15. Le procédé selon la revendication 9, dans lequel le prétraitement est réalisé au moyen du précurseur de molybdène soluble dans l'huile et mis en oeuvre en deux phases séparées :
• durant la première phase, les températures sont suffisamment basses pour empêcher la formation de molybdénite, permettant ainsi au précurseur d'être adsorbé sur la surface du catalyseur supporté ou de la matrice sans se décomposer ;
• dans la seconde phase, la température est accrue afin de permettre la formation de sulfure de molybdène.

16. Un procédé pour l'hydrotraitement d'hydrocarbures sélectionnés parmi des distillats moyens et lourds et des résidus de distillation, qui comprend l'envoi des hydrocarbures vers une étape d'hydrotraitement effectuée dans un ou plusieurs réacteurs à lit fixe, à l'aide d'un système catalytique selon au moins l'une des revendications 1 à 7, en présence d'hydrogène ou d'un mélange d'hydrogène et de H₂S, l'obtention d'un courant de produits en phase vapeur ou vapeur-liquide suivie d'une séparation dans le but d'obtenir un courant liquide, dans lequel l'étape d'hydrotraitement est mise en oeuvre à une température comprise dans la gamme allant de 340 à 440 °C et une pression comprise dans la gamme allant de 15 à 200 atmosphères.

17. Le procédé selon la revendication 16, dans lequel l'étape d'hydrotraitement est précédée d'un prétraitement du catalyseur dans le(s) même(s) réacteur(s) d'hydrotraitement au moyen d'une molybdénite préformée ou d'un précurseur de molybdène soluble dans l'huile ajouté(e) à la charge d'alimentation hydrocarbonée introduite, peut-être également de l'ajout d'un agent de sulfuration.
